# EUROPEAN PATENT APPLICATION

(11) **EP 3 748 523 A1**
(43) Date of publication of application: **09.12.2020**
(21) Application number: 19178772.0
(22) Date of filing: 06.06.2019
(51) Int. Cl.: G06F 21/51, G06F 21/57, G06F 21/64, G06F 15/163

(54) **MULTIPROCESSOR SYSTEM**

(71) Applicant: Secure Thingz Limited, Trumpington, Cambridge CB2 9FF (GB)
(72) Inventor: SPITZ, Stephan, 85757 Karlsfeld (DE); POVEY, Haydn, Cambridge CB2 9FF (GB)
(74) Representative: Patentship Patentanwaltsgesellschaft mbH

(57) **Abstract**

The invention relates to a multiprocessor system (100), comprising: a common processor carrier (101); a first digital processor (103) arranged on the common processor carrier (101); a second digital processor (105) arranged on the common processor carrier (101); and a memory (107) being configured to store an operating system program code, the operating system program code configuring an operation of the second digital signal processor (105), wherein the operating system program code is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair. The first digital processor (103) is configured to initiate a transmission of the operating system program code from the memory (107) to the second digital processor (105). The second digital processor (105) is configured to: receive the operating system program code; verify the digital signature of the operating system program code using the cryptographic decryption key; and execute the operating system program code if the digital signature has been successfully verified. Moreover, the invention relates to a corresponding method for configuring a multiprocessor system (100).

## Description

### TECHNICAL FIELD

The invention relates to secure electronic communication devices, in particular loT devices. More specifically, the invention relates to a multiprocessor system for such an electronic communication device.

### BACKGROUND OF THE INVENTION

Electronic communication devices, such as mobile phones or loT (loT: Internet of things) devices in general, usually include one or more processors configured to execute program code, such as application code, firmware code or the like, for performing different operations, such as processing data and/or communicating with other electronic communication devices in a cellular communication network.

In order to provide an efficient loT device, the processors can be arranged on a common carrier to form a multiprocessor system and can be adapted to perform at least partly different tasks. The multiprocessor systems can be further implemented as embedded systems which can be specifically designed for a certain loT application, such as capturing and transmitting measurement data.

However, a multiprocessor system can be subject to a cryptographic attack as well. There is, therefore, a need, to provide a more secure multiprocessor system.

### SUMMARY OF THE INVENTION

It is therefore an object of the invention to provide a cryptographically more secure multiprocessor system, in particular a loT multiprocessor system.

The foregoing and other objects are achieved by the subject matter of the independent claims. Further implementation forms are apparent from the dependent claims, the description and the figures.

According to a first aspect, the invention relates to a multiprocessor system, comprising: a common processor carrier; a first digital processor arranged on the common processor carrier; a second digital processor arranged on the common processor carrier; a memory being configured to store an operating system program code, the operating system program code configuring an operation of the second digital signal processor, wherein the operating system program code is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair; wherein the first digital processor is configured to initiate a transmission of the operating system program code from the memory to the second digital processor; wherein the second digital processor is configured to: receive the operating system program code; verify the digital signature of the operating system program code using the cryptographic decryption key; and execute the operating system program code if the digital signature has been successfully verified.

Thus, an improved multiprocessor system is provided allowing securely providing operating system program code on the multiprocessor system.

The multiprocessor system can be implemented as a SOC (SOC: System on Chip), in particular as an embedded system.

The operating system program code can form the operating system or at least a function of an operating system or when executed by the second processor.

In order to initiate the transmission of the operating system program code, the first processor can either transmit the operating system program code to the second digital processor or to trigger the second digital processor to retrieve the operating system program code from the memory.

In a further embodiment, the second digital processor is configured to discard the operating system program code if the digital signature has not been successfully verified. In order to discard the operating system program code, the operating system program code can be e.g. deleted or neglected by the second processor.

In a further embodiment, the second processor can be configured to indicate to the first processor, for example by transmitting an indication, that the digital signature has been successfully verified and/or that the digital signature has not been successfully verified. The indication can comprise a digital value indicating the verification status.

In a further embodiment, the multiprocessor system forms an loT device, wherein the multiprocessor system comprises a mobile communication interface coupled to the second digital processor, wherein the second digital processor is configured to control the mobile communication interface according to a communication profile for communications in the communication network. In an embodiment, the communication profile is part of the operating system program code received by the second digital processor.

The mobile communication interface can be adopted for wirelessly communicating in a mobile communication network. In this regard, the communication profile may be associated with a subscriber identity module, that can be implemented in the multiprocessor system, e.g. in the second digital processor or separately on the processor carrier. The communication profile can e.g. determine when the mobile communication interface shall communicate or may assign a frequency band to the communication interface. The mobile communication interface can be arranged to communicate over a 4G or 5G mobile communication network.

In a further embodiment, the operating system program code is a firmware, and/or a secure operating system program code, and/or an update of a current operating system installed in the second digital processor.

In a further embodiment, the operating system program code is an executable operating system program, wherein the second digital processor is configured to execute the operating system program code in order to install an operating system on the second digital processor, or to execute the operating system program code in order to update an existing operating system on the second digital processor.

In a further embodiment, the multiprocessor system is configured to store a further operating system program code in the memory or in the first digital processor, the further operating system code defining an operation of the first digital processor, wherein the further operating system program code is digitally signed with a further digital signature upon the basis of a further cryptographic encryption key, wherein the further cryptographic encryption key is associated with a further cryptographic decryption key, wherein the further cryptographic encryption key and the further cryptographic decryption key jointly form a further asymmetric cryptographic key pair, and wherein the first digital processor is configured to: verify the further digital signature of the further operating system program code using the further cryptographic decryption key; and execute the further operating system program code only if the further digital signature has been successfully verified.

In a further embodiment, the further operating system program code or the respective operating system program code is a firmware, and/or a secure operating system program code, and/or an update of a current operating system installed in the first digital processor. In an embodiment the further operating system program code is an executable operating system program, wherein the first digital processor is configured to execute the operating system program code in order to install an operating system on the first digital processor, or to execute the operating system program code in order to update an existing operating system on the first digital processor.

In a further embodiment, the respective digital processor is configured to execute the respective operating system program code in order to implement the respective operation according to the respective operating system program code on the first digital processor and/or the second digital processor. Thereby, a functionality of the respective digital processor is realized.

In a further embodiment, the memory is implemented in the first digital processor, wherein the first digital processor is configured to transmit the operating system program code towards the second digital processor. Alternatively or additionally, the memory is a shared memory implemented in the common processor carrier, wherein the first digital processor is configured to trigger the second digital processor to retrieve the operating system program code from the memory in order to initiate the transmission of the operating system program code towards the second digital processor.

In a further embodiment, the first digital processor is configured to verify the digital signature of the operating system program code using the cryptographic decryption key, and to initiate the transmission of the operating system program code if, in particular only if, the digital signature of the operating system program code has been successfully verified using the cryptographic decryption key.

In a further embodiment, the multiprocessor system further comprises a communication interface, the communication interface being configured to receive the operating system program code, wherein the memory is configured to store the received operating system program code.

In a further embodiment, the first digital processor is configured to digitally encrypt the operating system program code before initiating a transmission of the operating system program code to the second digital processor upon a basis of a symmetric or asymmetric encryption scheme.

In a further embodiment, the communication interface is configured to receive the operating system program code digitally signed with the digital signature upon the basis of the cryptographic encryption key, wherein the memory is configured to store the received digitally signed operating system program code. Alternatively, the communication interface is configured to receive the operating system program code without a digital signature, wherein the first digital processor is configured to digitally sign the operating system program code using the cryptographic encryption key. In an embodiment, the communication interface is configured to receive the further operating system program code in the memory or in the first digital processor, wherein the further operating system code defines an operation of the first digital processor.

In a further embodiment, the first digital processor comprises a processor memory being configured to store the cryptographic encryption key. Alternatively or additionally, the memory is configured to store the cryptographic encryption key. In an embodiment, the first digital processor is configured to digitally sign the operating system program code using the cryptographic encryption key.

In a further embodiment, the second digital processor comprises a processor memory being configured to store the cryptographic decryption key. Alternatively or additionally, the memory is configured to store the cryptographic decryption key.

In a further embodiment, the multiprocessor system further comprises a communication link connecting the second digital processor to the memory and/or to the first digital processor, in particular a communication bus, such as an Inter-Integrated Circuit bus, wherein the first digital processor is configured to initiate the transmission and/or to transmit the operating system program code to the second digital processor via the communication link.

In a further embodiment, the first digital processor is configured to transmit a security indication towards the second digital processor, wherein the security indication indicates a security status of the operating system program code. In an embodiment, the second digital processor is configured to process the operating system program code according to the security status and/or to assign processing resources which are associated with the security status for processing the operating system program code. In an embodiment, the security status can be, for instance, a level 1 security status indicating low security requirements or a level 5 security status indicating high security requirements, wherein in the level 5 security status only secure resources, i.e. security enclaves are allowed to process the operating system program code. Thus, the security indication allows controlling the secure processing of the operating system program code.

In a further embodiment, the security indication can be transmitted via the secure communication link, e.g. in form of the system bus architecture in the multiprocessor system, which allows the transmission of the security indication.

In a further embodiment, the first digital processor is configured to digitally encrypt the operating system program code before initiating a transmission of the operating system program code to the second digital processor.

In a further embodiment, the operating system program code is additionally encrypted with a symmetric cryptographic key, and wherein the memory is configured to additionally store this symmetric cryptographic key encrypted with the cryptographic encryption key; wherein the first digital processor is further configured to initiate a transmission of the digital signature and the encrypted symmetric key to the second digital processor, and wherein the second digital processor is configured to:
- receive the digital signature and the cryptographically encrypted version of the symmetric cryptographic key, i.e. the cryptographically encrypted symmetric cryptographic key;
- verify the digital signature using the cryptographic decryption key;
- decrypt the symmetric cryptographic key using the same cryptographic decryption key;
- decrypt the operating system program code using the symmetric cryptographic key
- execute the operating system program code if, in particular only if, the previous digital signature verification has been successfully performed, e.g. if the previous digital signature has been successfully verified.

Thereby, a hybrid cryptographic scheme, in particular a hybrid encryption scheme, is provided.

In an embodiment, the encrypted operating system program code is discarded if the decryption of the encrypted operating system program code has failed.

According to a second aspect the invention relates to a corresponding method for configuring a multiprocessor system, the multiprocessor system comprising a common processor carrier, a first digital processor arranged on the common processor carrier, a second digital processor arranged on the common processor carrier, and a memory being configured to store an operating system program code, the operating system program code defining an operation of the second digital signal processor, wherein the operating system program code is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair, the method comprising the steps of: initiating a transmission of the operating system program code from the memory to the second digital processor by the first digital processor; receiving the operating system program code by the second digital processor; verifying the digital signature of the operating system program code using the cryptographic decryption key by the second digital processor; and executing the operating system program code by the second digital processor if the digital signature has been successfully verified by the second digital processor in order to configure the multiprocessor system. Thus, an improved method for configuring a multiprocessor system is provided allowing securely providing operating system program code on the multiprocessor system.

The method according to the second aspect of the invention can be performed by the multiprocessor system according to the first aspect of the invention. Further features of the method according to the second aspect of the invention result directly from the functionality of the multiprocessor system according to the first aspect of the invention and its different implementation forms described above and below.

Embodiments of the invention are applicable for multiprocessor systems implemented as electronic communication devices, in particular loT devices, that use wireless communication technology, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

In embodiments of the present invention the electronic communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention the electronic communication devices may include one or more radio interfaces or modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analogue to digital and/or digital to analogue converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the electronic communication devices may be configured to communicate according to any other additional or alternative modulation scheme. In embodiments of the present invention, the radios may include, or may be associated with, one or more antennas. In one example, an electronic communication device may include a single antenna. In another example, an electronic communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention the processors of the electronic communication device may be configured to perform and/or to trigger, cause, instruct and/or control the electronic communication device to perform, one or more communications, to generate and/or communicate one or more messages and/or transmissions, and/or to perform one or more functionalities, operations and/or procedures. In embodiments of the present invention the processors may include circuitry and/or logic, Media-Access Control (MAC) circuitry and/or logic, Physical Layer (PHY) circuitry and/or logic, and/or any other circuitry and/or logic, configured to perform the functionality of the processors.

In embodiments of the present invention, at least part of the functionality of the processors may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic block diagram of a multiprocessor system according to an embodiment of the invention;
Fig. 2 shows a flow diagram illustrating steps of a method for configuring a multiprocessor system according to an embodiment of the invention;
Fig. 3 shows a schematic block diagram of a multiprocessor system according to a further embodiment of the invention; and
Fig. 4 shows a schematic block diagram illustrating processing steps implemented in a multiprocessor system according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

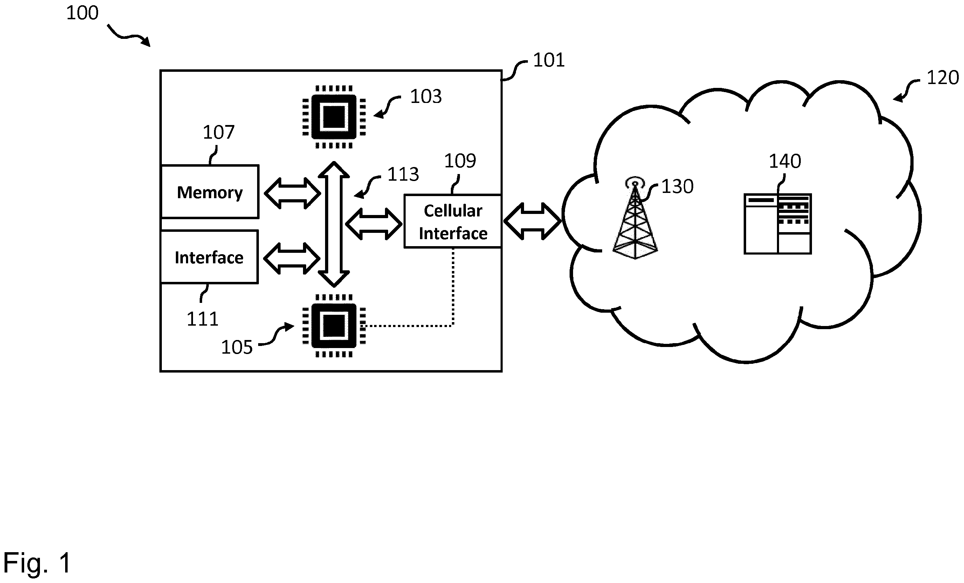

Figure 1 shows a schematic diagram of a multiprocessor system 100 according to an embodiment. In the embodiment shown in figure 1 the multiprocessor system 100 is implemented as an loT device 100 or a part thereof, which is configured for communication in a cellular communication network 120. According to an embodiment, the cellular communication network 120 is based on the 5G standard or a standard evolved therefrom. As schematically illustrated in figure 1, the cellular communication network 120 can comprise a radio access network 130 including a plurality of base stations and a core network 140 including a plurality of network servers providing different network functions.

As can be taken from figure 1, the multiprocessor system 100 comprises a first digital processor 103 and a second digital processor 105 arranged on a common processor carrier 101. According to an embodiment, the common processor carrier 101 can be a PCB or another type of physical support providing support for the first digital processor 103 and the second digital processor 105 and/or electronic connections for exchanging data between the first digital processor 103 and the second digital processor 105. In an embodiment, the first digital processor 103 is an application processor 103 of the multiprocessor system 100 and the second digital processor 105 is a communication processor, for instance, a cellular modem or baseband processor of the multiprocessor system 100.

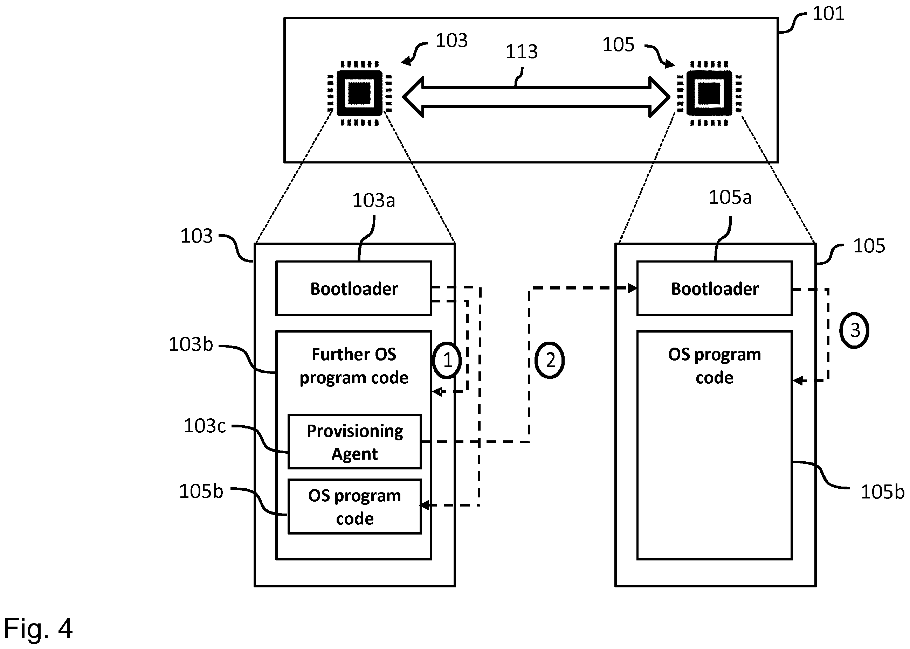

Moreover, the multiprocessor system 100 comprises a memory 107 being configured to store an operating system program code 105b (see figure 4), wherein the operating system program code allows 105b configuring an operation of the second digital signal processor 105. The operating system program code 105b is digitally signed with a digital signature upon the basis of a cryptographic encryption key, wherein the cryptographic encryption key is associated with a cryptographic decryption key and the cryptographic encryption key and the cryptographic decryption key jointly form an asymmetric cryptographic key pair, such as public key and a private key of a RSA key pair.

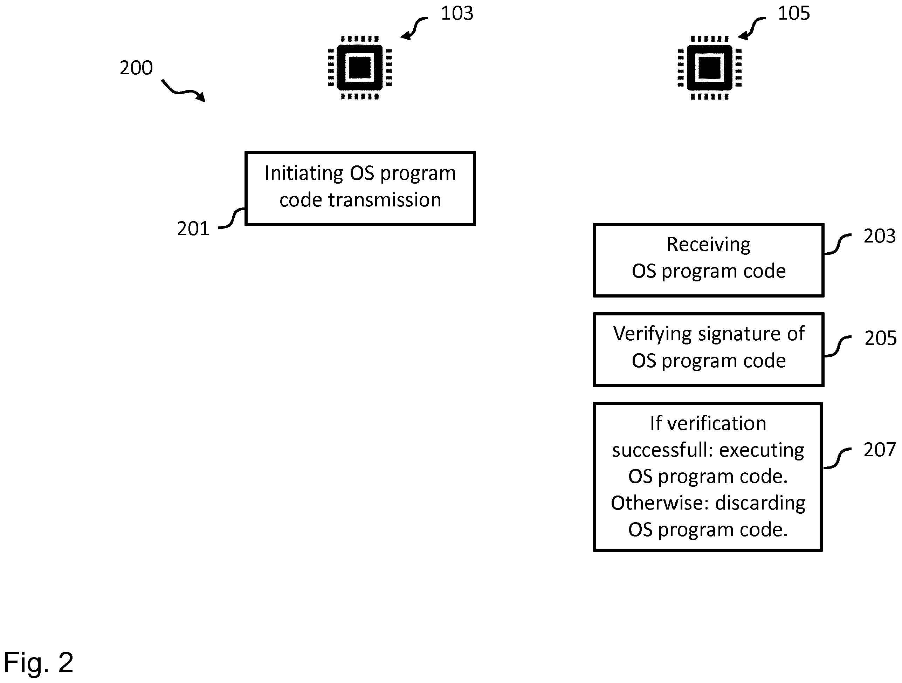

As will be described in more detail below under further reference figure 2, the first digital processor 103 is configured to initiate a transmission of the operating system program code 105b from the memory 107 to the second digital processor 105. In turn, the second digital processor 105 is configured to receive the operating system program code 105b and to verify the digital signature of the operating system program code 105b using the cryptographic decryption key. Once the second digital processor 105 has successfully verified the digital signature, it can execute the operating system program code 105b. Otherwise, i.e. if the digital signature was not successfully verified, the second digital processor 105 can discard the operating system program code 105b.

Figure 2 shows a flow diagram illustrating the steps of a method 200 for configuring the multiprocessor system 100 according to an embodiment of the invention. The method 200 comprises a first step 201 of initiating by the first digital processor 103 the transmission of the operating system program code 105b from the memory 107 to the second digital processor 105. Moreover, the method 200 comprises the following further steps performed by the second digital processor 105: a step 203 of receiving the operating system program code 105b; a step 205 of verifying the digital signature of the operating system program code 105b using the cryptographic decryption key; and a step 207 of executing the operating system program code 105b if the digital signature has been successfully verified in order to configure the multiprocessor system 100. Otherwise, i.e. if the digital signature was not successfully verified, the operating system program code 105b can be discarded.

Further embodiments of the multiprocessor system 100 and the method 200 for configuring the multiprocessor system 100 will be described in the following with the understanding that features described in the context of further embodiments of the multiprocessor system 100 can be incorporated in further embodiments of the method 200 as well and vice versa, unless explicitly stated otherwise.

In a further embodiment, the multiprocessor system 100 forms or is part of an loT device 100, i.e. an electronic communication device 100 configured to communicate over the cellular communication network 120. To this end, according to an embodiment the multiprocessor system 100 further comprises a mobile or cellular communication interface 109 for communication over the cellular communication network 120. The cellular communication interface 109 can comprise, for instance, an antenna.

As schematically illustrated in figure 1, the cellular communication interface 109 can be coupled to the second digital processor 105 in such a way that the second digital processor 105 can control the mobile communication interface 109 according to a communication profile for communications in the communication network 120. In an embodiment, the communication profile can be part of the operating system program code 105b received by the second digital processor 105. In an embodiment, the communication profile can comprise a unique subscriber identity, for instance an IMSI (international mobile subscriber identity) for identifying the multiprocessor system 100 within the cellular communication network 120.

In a further embodiment, the operating system program code 105b is a firmware, and/or a secure operating system program code, and/or an update of a current operating system already installed in the second digital processor 105. In an embodiment, the operating system program code 105b is an executable operating system program, wherein the second digital processor 105 is configured to execute the operating system program code 105b in order to install an operating system on the second digital processor 105, or to execute the operating system program code 105b in order to update an existing operating system on the second digital processor 105.

In a further embodiment, the multiprocessor system 100 is configured to store a further operating system program code 103b (see figure 4) in the memory 107 or in the first digital processor 103, wherein the further operating system code 103b defines an operation of the first digital processor 103. Similar to the operating system program code 105b intended for the second digital processor 105, the further operating system program code 103b can be digitally signed with a further digital signature using a further cryptographic encryption key, wherein the further cryptographic encryption key is associated with a further cryptographic decryption key, wherein the further cryptographic encryption key and the further cryptographic decryption key jointly form a further asymmetric cryptographic key pair. In this embodiment, the first digital processor 103 is configured to: verify the further digital signature of the further operating system program code 103b using the further cryptographic decryption key; and execute the further operating system program code 103b only if the further digital signature has been successfully verified.

Similar to the operating system program code 105b intended for the second digital processor 105, the further operating system program code 103b intended for the first digital processor 103 can be a firmware, a secure operating system program code, and/or an update of a current operating system installed in the first digital processor 103. In an embodiment the further operating system program code 103b intended for the first digital processor 103 is an executable operating system program 103b, wherein the first digital processor 103 is configured to execute the executable operating system program code in order to install an operating system or in order to update an existing operating system thereon.

Thus, according to embodiments of the invention, the respective first and second digital processor 103, 105 is configured to execute the respective operating system program code 103b, 105b in order to implement the respective operation according to the respective operating system program code on the first digital processor 103 and/or the second digital processor 105.

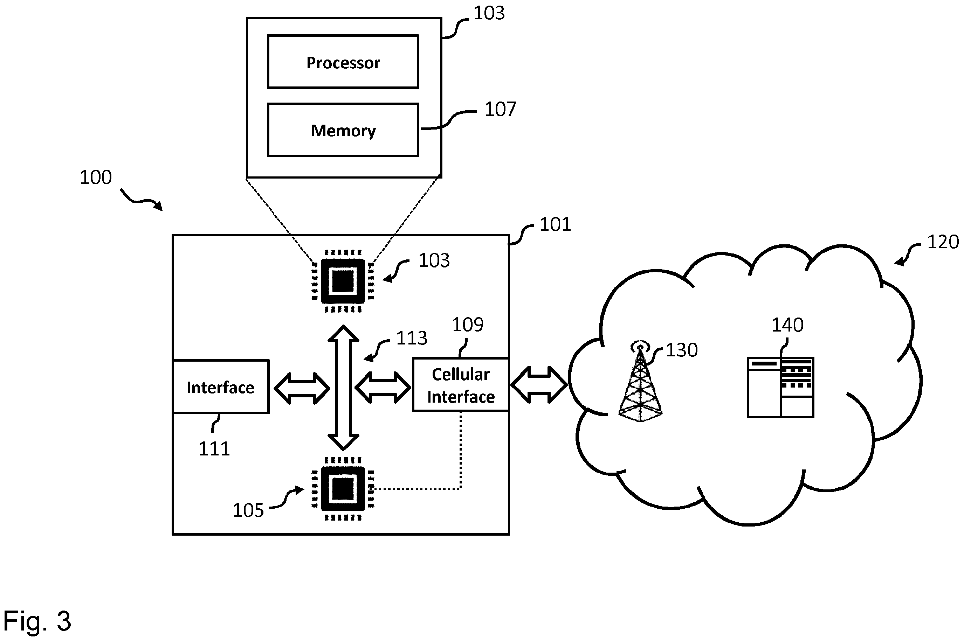

As illustrated in figure 1, the memory 107 can be a shared memory 107 implemented on the common processor carrier 101 and accessible by both the first digital processor 103 and the second digital processor 105, for instance, by a communication bus 113. In this case, the first digital processor 103 is configured to trigger the second digital processor 105 to retrieve the operating system program code 105b from the shared memory 107 in order to initiate the transmission of the operating system program code 105b to the second digital processor 105. According to an alternative or additional embodiment shown in figure 3, the memory 107 could be implemented as an internal memory 107 of the first digital processor 103. In this case, the first digital processor 103 is configured to directly transmit the operating system program code 105b stored in its internal memory 107 to the second digital processor 105.

For providing greater security and/or decreasing the computational load of the second digital processor 105 also the first digital processor 103 can be configured to verify the digital signature of the operating system program code 105b using the cryptographic decryption key, and to initiate the transmission of the operating system program code 105b to the second digital processor 105 if, in particular only if, the digital signature of the operating system program code 105b has been successfully verified using the cryptographic decryption key.

For initially providing the multiprocessor system 100 with the operating system program code 105b and/or the further operating system program code 103b the multiprocessor system 100 can comprise a further communication interface 111, as illustrated in figures 1 and 3. This communication interface 111, which can be a wired or wireless communication interface 111, is configured to receive the operating system program code 105b and forwarding the same to the memory 107, where it is stored for later transmission to the second digital processor 105.

For providing greater security the first digital processor 103 can be configured to digitally encrypt the operating system program code 105b before initiating a transmission of the operating system program code 105b to the second digital processor 105 on the basis of a symmetric or asymmetric encryption scheme, such as DSA or RSA.

In a further embodiment, the communication interface 111 is configured to receive the operating system program code 105b digitally signed with the digital signature upon the basis of the cryptographic encryption key, wherein the memory 107 is configured to store the received digitally signed operating system program code 105b. Alternatively, the communication interface 111 is configured to receive the operating system program code 105b without a digital signature, wherein the first digital processor 103 is configured to digitally sign the operating system program code 105b using the cryptographic encryption key. In an embodiment, the communication interface 111 is configured to receive the further operating system program code 103b in the shared memory 107 (figure 1) or in the internal memory 107 of the first digital processor 103 (figure 3), wherein the further operating system code 103b defines an operation of the first digital processor 103.

In a further embodiment, the first digital processor 103 comprises a processor memory, e.g. the internal memory 107 shown in figure 3, being configured to store the cryptographic encryption key. Alternatively or additionally, the shared memory 107 shown in figure 1 is configured to store the cryptographic encryption key. In an embodiment, the first digital processor 103 is configured to digitally sign the operating system program code 105b using the cryptographic encryption key.

In a further embodiment, the second digital processor 105 comprises a processor memory being configured to store the cryptographic decryption key. Alternatively or additionally, the shared memory 107 is configured to store the cryptographic decryption key.

As already mentioned above and as illustrated in figure 1, the multiprocessor system 100 can further comprise a communication link 113, in particular a communication bus 113, such as an inter-integrated circuit bus, connecting the second digital processor 105 to the shared memory 107 and/or to the first digital processor 103. In this case, the first digital processor 103 is configured to initiate the transmission and/or to transmit the operating system program code 105b to the second digital processor 105 via the communication link 113.

In a further embodiment, the first digital processor 103 is configured to transmit a security indication towards the second digital processor 105, wherein the security indication indicates a security status of the operating system program code 105b. In an embodiment, the second digital processor 105 is configured to process the operating system program code 105b according to the security status and/or to assign processing resources which are associated with the security status for processing the operating system program code 105b. In an embodiment, the security status can be, for instance, a level 1 security status indicating low security requirements or a level 5 security status indicating high security requirements (as well as corresponding levels in between), wherein in the level 5 security status only secure resources, i.e. security enclaves of the second digital processor 105 are allowed to process the operating system program code 105b. Thus, the security indication allows controlling the secure processing of the operating system program code 105b by the multiprocessor system 100.

In an embodiment, the security indication can be transmitted via the secure communication link 113, e.g. in form of the system bus architecture 113 in the multiprocessor system 100, which allows the transmission of the security indication.

In an embodiment, the first digital processor 103 is configured to digitally encrypt the operating system program code 105b before initiating a transmission of the operating system program code 105b to the second digital processor 105.

According to embodiments of the invention the first digital processor 103 can be implemented as an application processor 103 comprising as operating system program code 105b a "pre-provisioned" SIM stack, preferably including subscription credentials for attaching to the cellular communication network 120, and being configured to deploy this "pre-provisioned" SIM stack on the second digital processor 105 implemented in the form of a cellular modem processor 105 (such as a baseband processor 105). According to an embodiment, this configuration of the cellular modem processor 105 by the application processor 103 can be performed, once the application processor 103 and the cellular modem processor 105 are provided on the common processor carrier 101 of the multiprocessor system 100. i.e. when the multiprocessor system 100, in particular loT device 100 is assembled. The corresponding processing steps performed by the multiprocessing system 100 will be described in the following under further reference to figure 4, wherein the memory 107 and the interfaces 109, 111 shown in figures 1 and 3 have been omitted for the sake of clarity with the understanding that one or more of these components can be implemented in the multiprocessor system 100 shown in figure 4 as well.

For implementing one or more of the embodiments of the multiprocessor system 100 and the method 200 described above the first and second digital processor 103, 105 can comprise a respective secure bootloader 103a, 105a, as illustrated in figure 4. Thus, according to an embodiment, the secure bootloader 103a of the first digital processor 103 can verify the digital signature of the operating system program code 105b and/or the further operating system program code 103b (illustrated as stage 1 in figure 4). According to an embodiment, the further operating system program code 103b can comprise, i.e. implement a provisioning agent 103c for providing the operating system program code 105b to the second digital processor 105. For verifying the digital signature(s) the secure bootloader 103a of the first digital processor 103 can comprise one or two public keys corresponding to the private keys, which have been used for digitally signing the operating system program code 105b and the further operating system program code 103b in the first place, for instance, in the context of the so called "mastering" process in the development toolchain. During the next stage (illustrated as stage 2 in figure 4) the provisioning agent 103c implemented by the first digital processor 103 can deploy the image of the operating system program code 105b with the secure bootloader 105a of the second digital processor 105 using the secure communication channel 113 between the first and second digital processor 103, 105. As already described above, this secure communication channel 113 might be established by physical protection or by applying a cryptographic protocol. In a further stage (illustrated as stage 3 in figure 4) the bootloader 105a of the second digital processor 105 can accept the image of the operating system program code 105b, because it has been provided via the secure communication channel 113. In case a cryptographic protocol is used for securing the communication the authentication of the first digital processor 103 to the second digital processor 105 can authorize the loading of the operating system program code 105b by the secure bootloader 105a of the second digital processor 105.

According to a variant already described in a more general context above, the provisioning agent 103c implemented by the first digital processor 103 comprises a cryptographic key, which can be used for generating the necessary authentication for the operating system program code 105b to be loaded by the secure bootloader 105a of the second digital processor 105. According to this embodiment, the so called "mastering" is done locally with the help of the provisioning agent 103c implemented by the first digital processor 103. According to an embodiment, the first digital processor 103 can be configured to implement the provisioning agent 103c on the basis of the further operating system program code 103b.

As already described above in a more general context, the interface between the first digital processor 103 and the second digital processor 105 on a physical/protocol layer can be a memory mapped interface. In this embodiment, the memory 107 provides a shared memory space between the first digital processor 103 and the second digital processor 105 with a fixed location for the operating system program code 105b. In this case, the secure bootloader 105a of the second digital processor 105 can implement a look-up procedure for the operating system program code 105b and boot the operating system program code 105b after a reset when the integrity and authentication has been successfully verified.

According to a variant already described above in a more general context, the interface between the first digital processor 103 and the second digital processor 105 on a physical/protocol level can be a bus e.g. I2C, such as the communication bus 113 illustrated in figure 1, or a local Ethernet or USB interface which allows the provisioning agent 103c implemented by the first digital processor 103 to actively send the operating system program code 105b to the secure bootloader 105a of the second digital processor 105. In this case the secure bootloader 105a of the second digital processor 105 can comprise an integrated communication server for receiving the operating system program code 105b and the provisioning agent 103c of the first digital processor 103 can implement a corresponding client. In this embodiment, the secure bootloader 105a of the second digital processor 105 writes the operating system program code 105b after it has been received in its own memory and boots it after a reset of the multiprocessor system 100.

As already described above in a more general context, on a logical level the interface between the first digital processor 103 and the second digital processor 105 can be provided by the provisioning agent 103c of the first digital processor 103. In this embodiment, a public key is located in the provisioning agent 103c or alternatively communicated to the provisioning agent 103c by the secure bootloader 105a of the second digital processor 105. The corresponding private key is part of the secure bootloader 105a of the second digital processor 105. The provisioning agent 103c of the first digital processor 103 uses this public key to sign and encrypt the operating system program code 105b. Based on the signature with the public key the secure bootloader 105a of the second digital processor 105 will verify the signature with the corresponding private key and, if verified successfully, accept the operating system program code 105b and execute it.

According to a variant, the interface between the first digital processor 103 and the second digital processor 105 on a logical level can be incorporated in the development toolchain. In this case the public key can be located in the development toolchain. The corresponding private key is part of the secure bootloader 105a of the second digital processor 105. The development toolchain uses this public key to sign and encrypt the operating system program code 105b. Thus, in this variant, this functionality is integrated in the development toolchain and not the provisioning agent 103c implemented by the first digital processor 103. Based on the signature with the public key the secure bootloader 105a of the second digital processor 105 will verify the signature with the corresponding private key and, if the verification is successful, accept the operating system program code 105b and execute it.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. Multiprocessor system (100), comprising:
a common processor carrier (101);
a first digital processor (103) arranged on the common processor carrier (101);
a second digital processor (105) arranged on the common processor carrier (101); and
a memory (107) being configured to store an operating system program code (105b), the operating system program code (105b) configuring an operation of the second digital signal processor (105), wherein the operating system program code (105b) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair;
wherein the first digital processor (103) is configured to initiate a transmission of the operating system program code (105b) from the memory (107) to the second digital processor (105);
wherein the second digital processor (105) is configured to:
- receive the operating system program code (105b);
- verify the digital signature of the operating system program code (105b) using the cryptographic decryption key; and
- execute the operating system program code (105b) if the digital signature has been successfully verified.

2. The multiprocessor system (100) of claim 1, wherein the second digital processor (105) is configured to discard the operating system program code (105b) if the digital signature has not been successfully verified.

3. The multiprocessor system (100) of any one of the preceding claims, wherein the multiprocessor system (100) forms an loT device (100) for communication in a communication network (120), wherein the multiprocessor system (100) comprises a mobile communication interface (109) coupled to the second digital processor (105), wherein the second digital processor (105) is configured to control the mobile communication interface (109) according to a communication profile for communications in the communication network (120).

4. The multiprocessor system (100) of any one of the preceding claims, wherein the operating system program code (105b) is a firmware, and/or a secure operating system program code, and/or an update of a current operating system installed in the second digital processor (105).

5. The multiprocessor system (100) of any one of the preceding claims, being configured to store a further operating system program code (103b) in the memory (107) or in the first digital processor (103), the further operating system code (103b) defining an operation of the first digital processor (103), wherein the further operating system program code (103b) is digitally signed with a further digital signature upon the basis of a further cryptographic encryption key, wherein the further cryptographic encryption key is associated with a further cryptographic decryption key, wherein the further cryptographic encryption key and the further cryptographic decryption key jointly form a further asymmetric cryptographic key pair, and wherein the first digital processor (103) is configured to:
- verify the further digital signature of the further operating system program code (103b) using the further cryptographic decryption key; and
- execute the further operating system program code (103b) only if the further digital signature has been successfully verified.

6. The multiprocessor system (100) of claim 5, wherein the further operating system program code (103b) is a firmware, and/or a secure operating system program code, and/or an update of a current operating system installed in the first digital processor (103).

7. The multiprocessor system (100) of any one of the preceding claims, wherein the respective digital processor (103, 105) is configured to execute the respective operating system program code (103b, 105b) in order to implement the respective operation according to the respective operating system program code (103b, 105b) on the first digital processor (103) and/or the second digital processor (105).

8. The multiprocessor system (100) of any one of the preceding claims, wherein the memory (107) is implemented in the first digital processor (103) and wherein the first digital processor (103) is configured to transmit the operating system program code (105b) towards the second digital processor (105), or wherein the memory (107) is a shared memory implemented in the common processor carrier (101), and wherein the first digital processor (103) is configured to trigger the second digital processor (105) to retrieve the operating system program code (105b) from the memory (107) in order to initiate the transmission of the operating system program code (105b) towards the second digital processor (105).

9. The multiprocessor system (100) of any one of the preceding claims, wherein the first digital processor (103) is configured to verify the digital signature of the operating system program code (105b) using the cryptographic decryption key, and to initiate the transmission of the operating system program code (105b) if, in particular only if, the digital signature of the operating system program code (105b) has been successfully verified using the cryptographic decryption key.

10. The multiprocessor system (100) of any one of the preceding claims, further comprising a communication interface (111), the communication interface (111) being configured to receive the operating system program code (105b), wherein the memory (107) is configured to store the received operating system program code (105b).

11. The multiprocessor system (100) of any one of the preceding claims, wherein the first digital processor (103) is configured to digitally encrypt the operating system program code (105b) before initiating a transmission of the operating system program code (105b) to the second digital processor (105) upon a basis of a symmetric or asymmetric encryption scheme.

12. The multiprocessor system (100) of claim 10, wherein the communication interface (111) is configured to receive the operating system program code (105b) digitally signed with the digital signature upon the basis of the cryptographic encryption key, and wherein the memory (107) is configured to store the received digitally signed operating system program code (105b), or wherein the communication interface (111) is configured to receive the operating system program code (105b) without a digital signature, and wherein the first digital processor (103) is configured to digitally sign the operating system program code (105b) using the cryptographic encryption key.

13. The multiprocessor system (100) of any one of the preceding claims, wherein the first digital processor (103) comprises a processor memory (107) being configured to store the cryptographic encryption key or wherein the memory (107) is configured to store the cryptographic encryption key, and wherein the first digital processor (103) is configured to digitally sign the operating system program code (105b) using the cryptographic encryption key.

14. The multiprocessor system (100) of any one of the preceding claims, wherein the second digital processor (105) comprises a processor memory being configured to store the cryptographic decryption key or wherein the memory (107) is configured to store the cryptographic decryption key.

15. The multiprocessor system (100) of any one of the preceding claims, further comprising a communication link (113) connecting the second digital processor (105) to the memory (107) and/or to the first digital processor (103), in particular a communication bus (113), wherein the first digital processor (103) is configured to initiate the transmission and/or to transmit the operating system program code (105b) to the second digital processor (105) via the communication link (113).

16. The multiprocessor system (100) of any one of the preceding claims, wherein the first digital processor (103) is configured to transmit a security indication towards the second digital processor (105), the security indication indicating a security status of the operating system program code (105b), and wherein the second digital processor (105) is configured to process the operating system program code (105b) according to the security status, and/or to assign processing resources which are associated with the security status for processing the operating system program code (105b).

17. The multiprocessor system (100) of any one of the preceding claims, wherein the operating system program code (105b) is additionally encrypted with a symmetric cryptographic key, and wherein the memory (107) is configured to additionally store the symmetric cryptographic key encrypted with the cryptographic encryption key; wherein the first digital processor is further configured to initiate a transmission of the digital signature and the encrypted symmetric key to the second digital processor, and wherein the second digital processor is configured to:
- receive the digital signature and the cryptographically encrypted symmetric cryptographic key;
- verify the digital signature using the cryptographic decryption key;
- decrypt the symmetric cryptographic key using the cryptographic decryption key;
- decrypt the operating system program code using the symmetric cryptographic key; and
- execute the operating system program code if, in particular only if, the digital signature has been, in particular previously, successfully verified.

18. Method (200) for configuring a multiprocessor system (100), the multiprocessor system (100) comprising a common processor carrier (101), a first digital processor (103) arranged on the common processor carrier (101), a second digital processor (105) arranged on the common processor carrier (101), and a memory (107) being configured to store an operating system program code (105b), the operating system program code (105b) defining an operation of the second digital signal processor (105), wherein the operating system program code (105b) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair, the method (200) comprising:
initiating (201) a transmission of the operating system program code (105b) from the memory (107) to the second digital processor (105) by the first digital processor (103);
receiving (203) the operating system program code (105b) by the second digital processor (105);
verifying (205) the digital signature of the operating system program code (105b) using the cryptographic decryption key by the second digital processor (105); and
executing (207) the operating system program code (105b) by the second digital processor (105) if the digital signature has been successfully verified by the second digital processor (105) in order to configure the multiprocessor system (100).
